(19)

Europäisches Patentamt
European Patent Office
Office européen des brevets

(11) **EP 3 812 475 A1**

(12) **EUROPEAN PATENT APPLICATION**

(43) Date of publication:
**28.04.2021 Bulletin 2021/17**

(21) Application number: **19204888.2**

(22) Date of filing: **23.10.2019**

(51) Int Cl.:
*C22B 1/24* (2006.01)       *C22B 1/243* (2006.01)
*C21C 7/076* (2006.01)       *B01J 2/00* (2006.01)
*C01F 5/00* (2006.01)       *C01F 11/00* (2006.01)
*C04B 2/00* (2006.01)       *C05D 3/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Carmeuse Research And Technology
1348 Louvain-La-Neuve (BE)**

(72) Inventors:
• LEONARD, Géraldine
5081 BOVESSE (BE)
• BUGHIN, Olivier
6032 MONT-SUR-MARCHIENNE (BE)

(74) Representative: **Pronovem**
**Office Van Malderen**
**Parc d'affaires Zénobe Gramme- bâtiment K**
**Square des Conduites d'Eau 1-2**
**4020 Liège (BE)**

(54) **COMPACTED CALCIUM-BASED GRANULES**

(57)    The present invention is related to compacted calcium-based granules, in particular pellets, spheroidal/lens-shaped pellets, exhibiting specific chemical and physical properties and comprising a source of calcium and/or a source of magnesium, and optionally one or more additives. The present invention further relates to a method for the production of said pellets and to the use of said pellets in, for example, the steel industry, agriculture (in particular precision farming) and the glass industry.

Fig. 3

EP 3 812 475 A1

**Description**

**Field of the invention**

The present invention is related to compacted calcium-based granules, in particular pellets, spheroidal/lens-shaped pellets, exhibiting specific chemical and physical properties and comprising a source of calcium and/or a source of magnesium, and optionally one or more additives. The present invention further relates to a method for the production of said pellets.

**State of the art**

The use of calcium-based compounds, particularly quicklime and dolomitic lime, is widespread. Nowadays they are used in, without being limited thereto, soil treatment such as soil stabilization, soil liming and agriculture in general, steel industry, glass industry, chemical industry and the treatment of gases, water and sludges.

The production of quicklime, usually named as lime, in a lime kiln generates a significant amount of dust in the form of small particles typically having an average particle size lower than 1 mm. However, recycling and re-utilization of these waste products has been hindered because of problems associated with storage, handling and use of these finely divided materials. In several applications, larger calcium-based particles, for example in the shape of granules, such as pellets, or even larger, in the shape of briquettes, are preferred.

In the steel industry, calcium-based compounds, in particular lime or dolime, even more in particular quicklime (CaO), are used in several forms and shapes for several functions. One of the main functions is the purification of the products obtained in the steel making process by modifying their composition, for example in Basic Oxygen Furnace steel making (BOF), Electric Arc Furnace steel making (EAF), and in secondary refining.

Lime is used as slag forming material which extracts impurities such as silicon, sulphur and phosphorus, which are present in the steel making process, for example coming from the raw materials used in the process. Preferred sizing of lime in standard processes is between 5 mm and 50 mm. Since a negative pressure is maintained in the furnaces, lime particles lower than 2 mm or sometime lower than 10 mm must be avoided because they will be sucked out of the furnace and thus not used in the process. Their release into the atmosphere may create environmental issues. Lime as slag forming material can also be injected directly in the furnace, especially in the EAF process. The calcium from the lime will remove impurities from the liquid metal by forming slag with controlled viscosity and foaminess, and provides protection of the metal against the furnace atmosphere, and can be an insulator allowing to maintain the high temperatures in the process, typically around 1600 °C - 1800 °C. Preferred shapes for injection are pebbles, pellets, briquettes and tablets having dimensions typically between 2 mm and 12 mm. For optimal process control a narrow particle size distribution is preferred, for example pellets with an average dimension from 3 mm to 8 mm. Calcium-based products in powder form or dust form - so-called fines - tend to block and/or clog the equipment, in particular the injector and filters that may be implemented in the equipment.

In the glass industry, the calcium-based compounds, preferably lime, dolime, limestone or dolomitic limestone, are used as raw materials together with silica (e.g. silica sand), sodium (e.g. soda ash), and other components for the production of glass, such as flat glass, container glass and fiberglass. The Ca-based material is added to control the chemistry and the viscosity of the molten glass during the manufacturing, and brings stability to the glass phase and improves the glass' chemical resistance. Preferably, calcium-based (powder) particles or screened products and granules made from said (powder) particles are used. In particular, particles and pellets having an average size equal to and lower than 2 mm are used, because they allow a controlled and uniform dissolution of the calcium-source during the glass formation. Preferably, the amount of powder particles having an average size lower than 100 $\mu$m is minimal to avoid issues relating to clogging and handling, and environmental issues.

In agricultural applications, the calcium-based compounds are used as soil conditioner, or so-called soil liming agent, to neutralize acidity from the soil. The soil may be of acidic nature, having a pH value lower than 6 or even lower than 5. Its proper composition and/or the plants and crops and/or any nutrients and/or fertilizers distributed to the soil influence the soil's pH value. However, for optimal growth of plants and/or crops, a specific pH value, is preferred, depending on the plants, crops and the fertilizers and/or nutrients distributed onto the soil. Applying lime to the soil (soil liming) allows to increase its pH and provides better soils properties for a better fertility. Soil liming improves the soil's chemical properties to prevent the soil from toxicity and to obtain a more efficient uptake of major nutrients and/or fertilizers by the plants and crops. Soil liming improves the physical properties of the soil which allows a better water and air circulation and facilitates rooting and emergence. Soil liming also improves the biological properties contributing to plant nutrition and organic matter stability. The degree to which the liming product may increase the pH value is expressed by the neutralization value. The neutralizing value is a figure representing the amount of CaO equivalent in 100 g of product having the same neutralization capacity. It can be determined by analysis according to standard EN 12945.

Another important aspect in soil liming is the speed of action, so called reactivity. Reactivity of carbonate-based products, such as limestone, is closely influenced by the size but remains slow and largely dependent on soils conditions. Reactivity of oxide-based products, such as lime, is much higher due to their chemical composition but more dependent on its capacity to react with water upon absorption of water and/or moisture, such as moisture from the atmosphere, followed by decomposition into smaller particles. Proper dispersion of the particles is enhancing the reaction of the liming product within the soil. Calcium-based products with a high neutralizing value, good reactivity and a good dispersibility in water are known as good liming soil conditioners.

WO 2016/110572 (S.A. Lhoist - 2015) discloses a composition comprising at least one calcium-magnesium compound and a second compound in the form of briquettes with an average size of 15 to 20 mm.

GB 917967 (Knapsack AG - 1959) discloses a process for briquetting quicklime with two specific particle fractions in the presence of an aqueous suspension of graphite and notably hydrated lime.

WO 2018/007630 (S.A. Lhoist - 2016) discloses a composition based on burnt calcium-magnesium compounds in the form of briquettes comprising quicklime in the form of crushed particles. Also disclosed are a method for the preparation of said composition as well as the use thereof. WO 2018/007634 (S.A. Lhoist Recherche et Developpement - 2016) discloses a similar composition in the form of tablets but with larger size (>10 mm).

US 2005/0011309 (Larry D Wolfe - 2003) discloses calcium-based agglomerates comprising a non-aqueous binder, the agglomerates having a size between 1.0 mm and 20 mm.

CN 109384255 (Wuhan University - 2018) discloses spherical calcium oxide pellets having a diameter of 0.1 mm to 15 mm and comprising at least 90 wt% calcium oxide, the pellets being produced starting from limestone powder (calcium carbonate) in an aqueous process step, followed by a high-temperature process step.

US 2003/0097863 (Magic Green Corporation - 1995) discloses an agglomerate for use as a soil conditioner, in particular a liming agent, being formed by pelletizing (wet granulation) a pre-agglomerate, comprising about 15% to about 60% by weight of a particulate calcium source and about 30% to about 80% by weight of a primary plant nutrient source.

WO 2017/163246 (Dead Sea Works Ltd - 2016) discloses a spherical fertilizer granule having less than 3% porosity, and a process for the production by compacting a fertilizer dust, wherein more than 20% of the particles of said dust have a size of less than 150 $\mu$m at a temperature of 25-200 degrees Celsius and soft crushing the compacted material into granules.

A first problem encountered with the products of the prior art is that the products have suboptimal dimensions for most applications. Too small, powder-like or dust-like particles may stick together, and may cause clogging and blockage of the equipment used to store, handle, transport, distribute or inject the calcium-based products. Powder-like particles are further not heavy enough and show a suboptimal injection behavior into the slag, liquid metal or glass. For example, loss to the filter can be significant. Too large dimensions may, for many applications, lead to products that cannot be handled by the existing equipment, i.e. they are too large to exit the equipment or generate a low reaction control.

A second problem encountered with the products already available is that products having dimensions that allow handling often have insufficient mechanical properties, such as crush-resistance or resistance against rupture upon load crushing or compression, which may lead to fragmentation and powder formation upon handling of the product (storage, transportation, processing, etc.). Large quantities of expensive additives are used during manufacturing to enhance the mechanical properties, but they remain often suboptimal. Existing products with sufficient mechanical strength, made without the use of expensive additives, are tablets/briquettes, which for many applications are too large to be used. Further, existing processes to reduce their dimensions into usable dimensions have shown to reduce the mechanical strength to suboptimal values.

A third problem with the products of the prior art is that most products contain water-based additives, for example as a binder, which favors the formation of $Ca(OH)_2$ due to reaction between the calcium-source and the water contained in the additives. In most applications, $Ca(OH)_2$ is less concentrated in equivalent CaO compared to its dry form, CaO.

A further problem for certain applications, especially the applications envisaged in the present invention, are products with a large degree of porosity. A large degree of porosity may be obtained with manufacturing processes of the prior art that start from CaO that is hydrated water to obtain hydrated lime, which is shaped into granules and is subsequently dehydrated, giving CaO pellets with a high porosity.

Yet another problem in the production of commercially available CaO pellets is the use of high temperature processes. For example, the wet granulation of limestone followed by calcination typically requires high temperatures.

## Aims of the invention

The present invention aims to provide compacted spheroidal/lens-shaped granules that are crush-resistant, in particular spheroidal/lens-shaped pellets, such as spheroidal/lens-shaped pellets having a maximal size lower than 10 mm as measured by means of sieve analysis, having a granule density of at least 1.6 g/cm$^3$, and wherein the pellets comprise at least one calcium source and/or at least one magnesium source.

The present invention also aims to provide a process for manufacturing the compacted spheroidal/lens-shaped granules.

The invention further aims at the use of the pellets in agriculture (soil liming), in particular precision farming (soil conditioning), and in the steel industry and the glass industry.

**Summary of the invention**

The present invention discloses compacted spheroidal/lens-shaped pellets, said pellets comprising a calcium source and/or a magnesium source, said calcium source comprising at least CaO, said magnesium source comprising at least MgO, wherein the pellets comprise at least 60 wt%, preferably 70 wt% of said CaO and/or said MgO, based on the total weight of the pellets, wherein said pellets have:

- an average size lower than 10 mm, measured by sieve analysis,
- a granule density equal to or higher than 1.60 $g/cm^3$, preferably equal to or higher than 1.70 $g/cm^3$, measured by mercury picnometry.

According to specific embodiments, the pellets may further have one or a combination of the following properties:

- a particle size distribution (PSD) after tablet breaking and prior to screening, having a D10/D90 ratio equal to or higher than 0.60; the D10 value and the D90 value being calculated from the particle size distribution measured by sieve analysis,
- a mercury porosity equal to or lower than 0.3 $cm^3/g$, preferably equal to or lower than 0.2 $cm^3/g$, measured by mercury intrusion on pores with a diameter larger than 7.5 nm,
- a load until rupture of at least 40 N, preferably at least 75 N, measured by compression testing until rupture,
- a neutralization value of at least 70 equivalent CaO according to EN12945, preferably at least 75 equivalent CaO, 80 equivalent CaO, 85 equivalent CaO, 90 equivalent CaO, or 95 equivalent CaO, and
- a dispersibility of at least 70% at 315 $\mu$m in water according to the method defined in EN15704.

The present invention further discloses a process for the manufacturing the compacted spheroidal/lens-shaped pellets according to the invention, wherein said process comprises at least the following steps:

- providing a homogeneous powder comprising a calcium source and/or a magnesium source, the calcium source comprising at least CaO, the magnesium source comprising at least MgO,
- compacting the homogeneous powder between two rollers to form a compacted tablet,
- tablet breaking of the compact tablet into compacted spheroidal/lens-shaped pellets,
- screening the compacted spheroidal/lens-shaped pellets by sieving to separate the undersized, in particular broken pellets and the oversized compacted spheroidal/ lens-shaped pellets, in particular pellets lacking sufficient separation, i.e. agglomerates of pellets, from the pellets having a pre-selected pellet size,

wherein the gap, being the distance between the outer surface of the rollers, said outer surfaces facing each other, measured in the plane defined by the middle point of the cross-section of the two rollers and their central axis, is at least 0.1 mm, and wherein the force between the two rollers, measured at the position where the gap is measured, in the compacting step is between 25 kN and 75 kN, preferably between 40 kN and 60 kN, for a roller having a diameter between 250 mm and 1500 mm, preferably between 400 mm and 600 mm, and having a width between 40 mm and 1200 mm, preferably between 145 mm and 500 mm, meaning applying a pressure between 50 MPa and 500 MPa, preferably between 100 MPa and 300 MPa.

According to specific embodiments of the invention, the homogeneous powder may comprise an additive selected from the group consisting of a fertilizer, a nutrient, lubricating agent and a binding agent.

The process may comprise additional processing steps, such as one or a combination of:

- a mixing step prior to the compacting step,
- a feeding step of the homogeneous powder to the rollers,
- a post-treatment, preferably a coating step, applied to the compacted spheroidal/lens-shaped pellets after the step of sieving the pellets, and
- a step of recycling the undersized compacted spheroidal/lens-shaped pellets and/or the oversized compacted spheroidal/lens-shaped pellets.

Finally, the present invention discloses the use of pellets of the invention as:

- deacidifying product in agriculture, in particular in precision farming,
- slag forming material in the steel industry, and
- raw material for the production of glass in the glass industry, in particular for fiberglass.

## Short description of the drawings

Fig. 1 relates to a schematic representation of a process according to the invention.
Fig. 2 relates to another schematic representation of a process according to the invention.
Fig. 3 shows a photo of spheroidal pellets according to the invention, having an average size of 4 mm.
Fig. 4 shows a photo of spheroidal/lens-shaped pellets according to the invention, having an average size of 5.5 mm.
Fig. 5 shows the cumulative particle size distribution (PSD) in graphical form for the examples according to the invention and two comparative samples.
Fig. 6 shows the projection angle distribution for several examples.
Fig. 7 shows the average projection distance for different rotation speeds of the distribution disk of the projecting for several examples.

Overview of the reference numbers used in the drawings:

1      homogeneous powder
2      compactor
3      first roller
4      second roller
5      compacted tablet
6      tablet breaker
7      polishing drum
8      compacted spheroidal pellet
9      screener
10     pellet having a pre-selected pellet size
11     oversized pellet
12     undersized pellet
13     additive
14     post-treatment equipment
15     pellet after post-treatment
16     grinder
17     recycled powder particles
18     mixer
19     homogeneous powder
50     spheroidal pellet
51     first plate
52     second plate

## Detailed description of the invention

The pellets of the invention comprise at least a calcium source and/or a magnesium source. The calcium/magnesium source to be compacted may be a powder comprising particles having a D95 value of the particle size distribution (PSD) equal to or lower than the desired size of the resulting pellet, such as a D95 value equal to or lower than 50% of the desired D50 value of the pellets, wherein the particle size is measured by sieve analysis. For example, for compacted pellets according to the invention having an average size of 4 mm (or D50 value), the calcium/magnesium source preferably is a powder comprising particles having a D95 value lower than 2 mm.

The D50 value and the D95 value of a compound comprising particle are calculated from the particle size distribution for that compound, e.g. the pellets or the powder, and in particular from the cumulative particle size distribution for that compound comprising particles. The D50, resp. D95 value is the size of the particles of the compound - i.e. pellets or powder comprising particles - for which 50%, resp. 95% of the compound's particles have a size equal to or lower than the D50, resp. D95 value. Other Dx values are calculated in the same way, wherein x is a value between 0 and 100, meaning that for a given Dx value x% of the particles (pellets, granules, powder particles) have a size equal to or lower than the Dx value.

For example, for particles or pellets having an average size (i.e. D50 value of the particle size distribution (PSD)) of 4 mm, a D10 value of 1 mm and a D90 value of 10 mm, this means that 10% of the particles or pellets have a size equal to or lower than 1 mm and 90% of the particles or pellets have a size equal to or lower than 10 mm. This means that 80% of the particles or pellets have a size higher than 1 mm and equal to or lower than 10 mm. The D10/D90 ratio is 0.10. The particle size distribution is in the light of the present invention considered as a wide particle size distribution.

For example, for particles or pellets having an average size (i.e. D50 value of the particle size distribution (PSD)) of 4 mm, a D10 value of 3.6 mm and a D90 value of 4.8 mm, this means that 10% of the particles or pellets have a size equal to or lower than 3.6 mm and 90% of the particles or pellets have a size equal to or lower than 4.8 mm. This means that 80% of the particles or pellets have a size higher than 3.6 mm and equal to or lower than 4.8 mm. The D10/D90 ratio is 0.75. The particle size distribution is in the light of the present invention considered as a narrow particle size distribution.

Preferably, the calcium source comprises CaO as main component. The calcium source may further comprise $CaCO_3$ and/or $Ca(OH)_2$. The calcium source may further comprise dolime (CaO.MgO) and/or dolomite $(CaMg(CO3)_2)$.

Preferably, the magnesium source comprises MgO as main component. The magnesium source may further comprise $MgCO_3$ and/or $Mg(OH)_2$.

The pellets according to the first aspect of the invention comprise at least 60 wt% of CaO and/or MgO, based on the total weight of the pellets. The pellets may comprise at least 65 wt% CaO and/or MgO, such as at least 70 wt%, 75 wt%, 80 wt%, 85 wt% or 90 wt% CaO and MgO.

The compacted spheroidal/lens-shaped pellets according to the first aspect of the invention may further comprise one or more additives, such as a fertilizer, a nutrient, a lubricating agent and/or a binding agent. Said nutrient may be a micronutrient. Said fertilizer may be, without being limited thereto, ammonium nitrate ($NH_4NO_3$), urea. Said nutrient may be, without being limited thereto, potassium chloride (KCl). The binding or lubricating agent may be, without being limited thereto, PEG, calcium stearate ($C_{36}H_{70}CaO_4$), magnesium stearate ($C_{36}H_{70}MgO_4$), $NaNO_3$, or a lignosulfonate, such as calcium lignosulfonate ($C_{20}H_{24}CaO_{10}S_2$). Preferably, the optional additive is free of water.

The particle size distribution (PSD) is measured by means of sieve analysis. Sieve analysis is an analysis technique known in the field, and uses sieves with different mesh sizes to determine the weight fraction (in wt%) of the initial weight of the test sample that is passing the sieve with a given mesh size. Preferably, the sieving is performed by means of vibrating sieves, wherein the sieve vibrating is controlled by the equipment used. Alternatively, the sieving may be performed manually. Components of the test sample that pass a sieve with a certain mesh size have at least one dimension that is smaller than the mesh size of that particular sieve. The mesh sizes used in the sieve analysis will depend on the expected dimensions of the particles under investigation. It may be preferred to perform a first sieve analysis with a wide range of mesh sizes, for example going from 50 $\mu$m to 15 mm, to have an idea of the particle size range. A second sieve analysis may be carried out with sieves having a mesh size around the particle size range obtained in the first sieve analysis, to obtain a more detailed particle size distribution. The standard measurement procedure starts with the sieve with the largest mesh size and ends with the sieve with the smallest mesh size.

Preferably, the pellets of the invention have a D10/D90 ratio equal to or higher than 0.60, for example equal to or higher than 0.65, 0.70, or 0.75.

The compacted spheroidal/lens-shaped pellets may have a shape ratio equal to or higher than 0.56, such as equal to or higher than 0.58, 0.60, 0.62 or 0.65. The shape ratio is in the light of the present invention defined as the ratio of the minimum dimension (preferably the thickness) to the maximum dimension (preferably the length) of a same pellet.

The density of granules can be defined in different ways. The bulk density is the density calculated from the weight of pellets that fills a given volume, for example 300 $cm^3$. The bulk density is measured according to ASTM D5004, performing the measurement three times and calculating the average bulk density. The bulk density takes into account the interstices between the pellets in said volume filled with pellets, the volume of solid material of the pellets and the volume of the closed and open pores of the pellet. For example, when a volume of 300 $cm^3$ is filled with 600 g of pellets, the bulk density is 2 $g/cm^3$.

The granule density, also called the apparent particle density, is the mass of a particle or pellet divided by its apparent pellet or granule volume, i.e. the volume calculated from the outer dimensions of the pellet. The granule density takes into account the volume of solid material of the pellets and the volume of the closed and open pores of the pellet. The granule density is measured with a mercury picnometer. The granule density by means of mercury picnometry is measured on 0.3 g pellets according to the following procedure *(source: catalogue of PMI - Porous Material Inc., and 'Improved mercury picnometry for measuring accurate volumes of solid materials', by S Yamagishi and Y Takahashi, published on IOPScience website):*

- sample cell is weighed,
- sample is placed in the sample cell, cell and sample are weighed together. This gives accurately the weight of the sample,

- mercury is added to the cell until saturation at atmospheric pressure,
- the cell including the sample and the mercury is weighed,
- the granule density of the sample is computed from the known weights, the volume of the cell, the volume of mercury in the cell with and without the sample being present, and the density of the mercury.

The measurement is performed 3 times, and the average granule density is calculated.

The skeletal density of a granule is defined as the mass of discrete pieces of solid material divided by the sum of the volume of the solid material and the closed pores. The skeletal density is measured according to ASTM D3766, and takes into account the volume of solid material of the pellets and the volume of the closed pores of the pellet.

The true density of a granule is defined as the mass of a pellet divided by the volume of solid material, excluding the volume of the open and the closed pores.

In the light of the present invention, the granule density or apparent particle density is preferred. Preferably, the compacted pellets have a granule density, measured by means of mercury picnometry, equal to or higher than 1.60 $g/cm^3$, such as equal to or higher than 1.70, 1.85, 2.00, 2.10, or 2.2 $g/cm^3$. It is to be understood that the maximal granule density of the pellet is the density of the raw material's skeleton for a pellet having no pores. For example, when pure CaO is used to produce the compacted spheroidal/ lens-shaped pellets, the maximal granule density would be from 3.2 $g/cm^3$ to 3.3 $g/cm^3$.

The granule density is a measurement for the degree of porosity of a pellet. The higher the granule density, the more compact the pellet is and the lower the degree of total porosity. In the light of the present invention, pores in the pellets having an equivalent pore size lower than 2 nm are classified as micropores, while pores with an equivalent pore size higher than 50 nm are classified as macropores, and pores with an equivalent pore size equal to or lower than 50 nm and equal to or higher than 2 nm are classified as mesopores. This division into micropores, mesopores and macropores is common general knowledge *(source: Reporting Physisorption Data for Gas/Solid Systems, with Special Reference to the Determination of Surface Area and Porosity, Pure & Appl. Chem., Vol. 57, No. 4, pp. 603-619, 1985)*.

Preferably, the pellets have a mercury porosity, measured on pores with a diameter larger than 7.5 nm, equal to or lower than 0.3 $cm^3/g$, such as equal to or lower than 0.28, 0.25, 0.22, 0.20, or 0.19 $cm^3/g$.

The mercury porosity is measured by mercury porosimetry, preferably mercury intrusion, and is expressed as the pore volume of the pellet that is filled with mercury during the test per gram of pellet ($V_{Hg}$ in $cm^3/g$), for pores with a diameter larger than 7.5 nm. The test is performed on a mass of 0.3 g pellets. Mercury, a non-wetting liquid, is forced to enter the pores at a set pressure. The measurement is performed in a pressure range between 0.012 MPa and 200 MPa, starting with the lowest pressures. For low pressures, an equipment Porosimeter Pascal 140 (supplier: Thermo Scientific) is used, for high pressures, an equipment Porosimeter Pascal 240 (supplier: Thermo Scientific) is used.

Preferably, the compacted pellets have a load until rupture of at least 40 N, such as at least 50 N, 60 N or at least 75 N. Preferably, the compacted pellets have a compressive strength, as measured by compression testing until rupture, of at least 1.8 $N/mm^2$, such as at least 2.0 $N/mm^2$ or 4.0 $N/mm^2$. The inventors have discovered that pellets having a load until rupture of at least 40 N and/or a compressive strength of at least 1.8 $N/mm^2$ provide sufficient mechanical strength to withstand handling, transport and distribution with a highly reduced degree of damaged pellets.

The load until rupture, and corresponding compressive strength, is measured by means of compression testing, in particular crush testing, until rupture, using a high quality digital particle strength tester YHKC-2A. A spheroidal/lens-shaped pellet is placed on a first plate with its two largest dimensions (preferably length and width) parallel to the plane of the first plate and its third dimension (preferably the thickness) perpendicular to the plane of the first plate. The first plate is positioned parallel to the plane of the floor. Another plate, parallel to said first plate, is pressed onto the pellet with a predetermined force. The applied force is increased until fraction or rupture of the pellet occurs. The load until rupture is defined as the force applied by the test equipment to the pellet under testing at the moment of rupture of the pellet.

The compressive strength of the pellet in term of pressure ($N/mm^2$) is defined as the maximal force applied by the second plate to the pellet until fraction or rupture of the pellet divided by the average projected surface of the tested pellet. The average projected surface is calculated according to formula (I), wherein x and y are the two largest dimensions of the pellet, i.e. the dimensions that are positioned parallel to the plane of the first plate upon testing (preferably length and width).

$$Average\ projected\ surface = \pi * \frac{x}{2} * \frac{y}{2} \qquad (I)$$

The compressive strength in the present invention is measured on pellets having an average dimension between the lowest dimension that provides pellets that are not fractured, and the highest dimension that provides single pellets. For example, for pellets having an average diameter (i.e. D50 value of the particle size distribution (PSD)) around 4 mm, the compressive strength is tested on pellets having dimensions between 3 and 5 mm. For pellets having an average diameter (i.e. D50 value) around 5.5 mm, the compressive strength is tested on pellets having dimensions between 5 mm and 6 mm. This ensures measurement on well-shaped pellets and allows comparison of the compressive strength values (in N/mm$^2$) and of the load until rupture (in N). The compressive strength and the load until rupture is the average value of the compressive strength and the load until rupture of 15 to 20 pellets taken at random from a batch of pellets and tested individually.

The inventors have discovered that compacted pellets having a spheroidal/ lens-shaped shape may even further reduce the risk of clogging and of blockage of the equipment. Spheroidal/lens-shaped pellets have a reduced number of sharp edges compared to pellets having random shapes. Said sharp edges may break off during handling of said pellets. A reduced number of sharp edges may reduce the quantity of powder and particles having undersized dimensions, and may thus reduce said clogging.

Preferably, in particular for use in soil conditioning (e.g. soil liming), the pellets have a neutralization value of at least 70 equivalent CaO according to EN12945, for example at least 75 equivalent CaO, 80 equivalent CaO, 85 equivalent CaO, 90 equivalent CaO, or 95 equivalent CaO.

Preferably, in particular for use in soil conditioning, the pellets have a dispersibility of at least 70% at 315 μm in water, such as at least 75%, 80%, 85%, 87%, 90%, 92%, or 95% at 315 μm in water. The dispersibility is measured on the pellets of the invention using the method defined in the standard EN15704, adapted to be applied for oxide-based products instead of carbonate products.

A further important characteristic of products used for soil conditioning (e.g. soil liming) is the handling performance and the dispersion performance to the field. An improved handling performance may ensure an easier filling of equipment and transportation of the pellets from the equipment reservoir to the distribution part of the equipment, e.g. a distribution disk that is rotating, with a reduction in loss of material due to crushing and breaking. An improved dispersion performance allows to spread the required quantity of product in a precise way, reducing the quantity of pellets needed for sufficient liming products, e.g. deacidifying products, per unit of soil surface area. The dispersion performance can be characterized by, amongst others, the projection distance and the projection angle, in particular the projection angle distribution.

The average projection distance is the weighted average of the projection distance distribution. The projection distance distribution provides the weight fraction of the total captured mass of pellets per projection distance, and is measured as explained below by using compartments of 0.5 m.

The maximal projection distance is the maximal distance to which the pellets are dispersed upon testing as explained below, and is a value for a set projection angle, since the projection angle is a set value in the test method.

The projection angle and the projection distance are measured using a method and equipment as described in NBN EN 13739-1:2011 and NBN EN 13739-2:2011.

The equipment used for the measurement of the projection angle is a lab-scale version of a fertilizer and nutrient distribution equipment (supplier: Irstea) onto which a collector is placed. The collector is divided in compartments of each 15°, as measured from the middle point of the equipment in an angular direction. 1 kg to 2 kg of pellets are fed to the distribution equipment, which supplies the pellets to the distribution disk under a fixed angle and at a constant flow. The distribution disk rotates at a preset velocity. In the light of the present invention, the rotational speed of the distribution disk is varied between 600 rpm and 1000 rpm. Such a rotational speed represents a real rotational speed used in agriculture on large-scale devices, in particular for precision farming. The collector collects the projected, dispersed pellets and provides information on the weight fraction of the total captured mass that is projected at each angle.

A narrower projection angle distribution indicates a more precise orientation of the pellets upon dispersion. A lower average projection angle indicates a lower loss of energy in the distribution equipment, in particular in the rotating distribution disk of the distribution equipment, and a lower energy loss indicates a more efficient dispersion or projection of the pellets to the field's surface area.

The projection distance is measured by means of an equipment that is a lab-scale version of a fertilizer and nutrient distribution equipment (supplie: Irstea, equipment described in for example EP 1 610 112 B1) onto which a collector is placed. The collector extends in a radial direction from the middle point of the equipment, and is divided in compartments of 0.5 m long. The projection angle for the test is determined and set in the equipment. 1 kg to 2 kg of pellets are fed to the distribution equipment, which supplies the pellets to the distribution disk under the set projection angle and at a constant flow. The distribution disk rotates at a preset velocity. In the light of the present invention, the rotational speed of the distribution disk is varied between 600 rpm and 1000 rpm. The collector collects the dispersed pellets and provides information on the weight fraction of the total captured mass that is projected in radial direction, under the set projection angle, at each compartment of the collector. These weight fractions provide the projection distance distribution at the set projection angle, and allow to calculate the average projection distance.

By repeating the projection angle measurement for every projection angle, a 3D-representation of the dispersion of the pellets can be obtained, presenting in the X-Y-plane the surface area covered in angular and radial direction, and on the Z-axis the weight fraction of the total captured mass at each point in the X-Y-plane. Alternatively, a 3D-representation can be obtained by extrapolating the projection distance data obtained for a single, set, projection angle, wherein the extrapolation is performed using a model. The 3D-representation of the pellet dispersion visualizes the dispersion of the pellets as measured by using a combination of projection angle measurement and projection distance measurement. The 3D-representation can also be presented in 2D, using a color scale to present the data of the Z-axis (weight fractions).

A large (maximal) projection distance allows also to supply pellets to a larger width of the field upon a single passage of the distribution equipment. For example, for a projection distance of 10 m, a width of 20 m is covered in a single passage, i.e. 10 m at both sides of the distribution equipment, in particular at both sides of the center of the rotating disk of the distribution equipment. An improved projection distance of 20 m allows to cover a width of 40 m in a single passage, i.e. 20 m at both sides of the distribution equipment, in particular the center of the rotating disk of the distribution equipment. Hence, the number of passages needed to disperse the required quantity of pellets to the field may be reduced.

Preferably, the pellets have an average projection distance of at least 15 m for rotation speeds of the distribution disk between 600 rpm and 1000 rpm, such as at least 16 m or 17 m. Preferably, the pellets have an average projection distance of at least 15 m, such as 16 m or 17 m, for a distribution disk rotation speed of 600 rpm. Preferably, the pellets have an average projection distance of at least 16 m, such as 18 m or 20 m, for a distribution disk rotation speed of 800 rpm. Preferably, the pellets have an average projection distance of at least 18 m, such as 20 m or 22 m, for a distribution disk rotation speed of 1000 rpm.

The applicants have surprisingly discovered that for the pellets of the invention, an increased average projection distance is obtained compared to state of the art products. The applicants have further discovered that the dispersion has an improved homogeneity compared to state of the art products. Hence, the number of passages needed to cover uniformly a field is reduced. Distribution at the same speed in combination with a reduced number of field passages reduces the total time needed to distribute the required quantities of pellets to a field, which clearly is an economical advantage. Further, these improvements are realized when using standard precision farming equipment, excluding the need for specialized equipment.

Alternatively, when the dispersion of the pellets to the field requires maintaining a preset projection distance that is also used to disperse other products to the field, and/or that is limited by the field's geometry, orientation, and slope, and this requires a preset projection distance lower than the (maximal) projection distance obtainable for a preset rotational speed of the rotating disk of the distribution equipment, the rotational speed of the rotating distribution disk can be reduced. A reduced rotation speed of the distribution disk may reduce the impact force on the pellets, resulting in reduced damage to the pellets upon feeding to the distribution disk. The pellets according to the invention reach surprisingly improved (average) projection distances that are similar to those of fertilizers and nutrients, contrary to products of the state of the art.

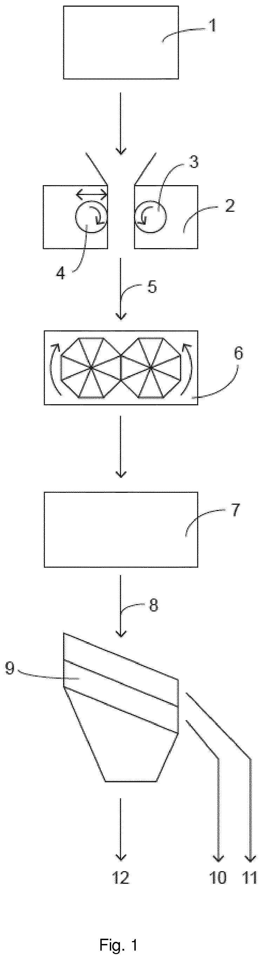

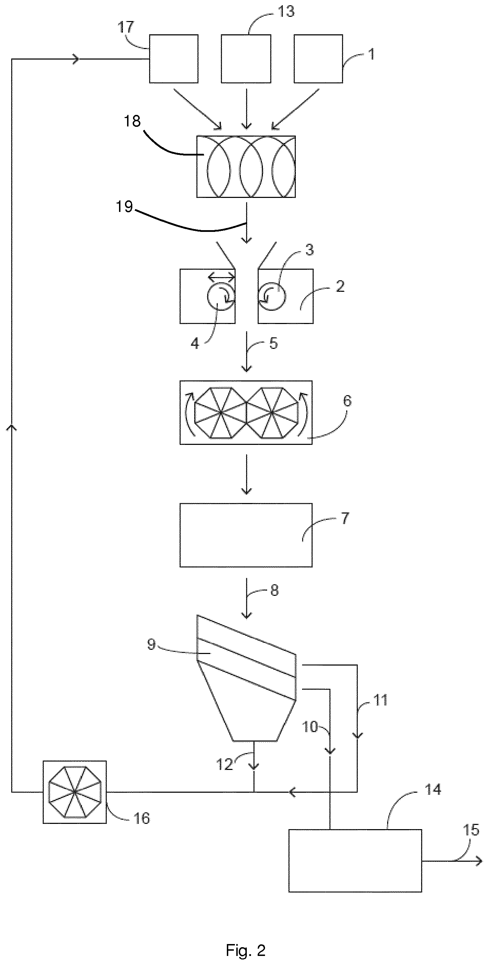

Fig. 1 and Fig. 2 show a schematical representation of a process for manufacturing pellets according to the invention. The process is a substantially dry process, i.e. a process wherein substantially no water and/or substantially no liquid, for example a solvent, is used.

According to Fig. 1, a homogeneous powder 1 is provided, comprising a calcium source and/or a magnesium source, the calcium source comprising at least CaO, the magnesium source comprising at least MgO. Preferably, the homogeneous powder 1 is homogeneous to the naked eye. The powder 1 is supplied to a compactor 2 comprising at least a first roller 3 and a second roller 4. The powder 1 is compacted between the rollers 3 and 4 into a compacted tablet 5. Preferably the rollers 3, 4 have a parallel position into the compactor 2 and a predefined gap between the rollers 3, 4. Preferably, one of the rollers 3 has a fixed position, in particular the axis of the roller 3 has a fixed position. Preferably, the other roller 4 has a movable position, in particular the axis of the roller 4 has a movable position, to allow provision of a constant compacting pressure. Advantageously, the compactor 2 further comprises a feed system to provide a flow of powder to the rollers 3, 4. The quality and uniformity of the tablets obtained in the compacting step depends at least on the provision of a steady flow of powder to the rollers 3, 4. The feed system may be fitted with one or more conical screws. The rotational screw speed may be variable. Preferably, the screws squash out any air, i.e. air voids, from the powder feed, and perform a pre-compacting step on the powder before the compacting step by the rollers 3, 4. Preferably, one or both rollers 3, 4 have an embossed surface. Preferably, the embossed surface comprises a plurality of cavities. When one or both rollers 3, 4 comprise a plurality of cavities, the resulting tablet will have respectively one or two, parallel, surface sides comprising bumps. The powder 1 may be preheated prior to the compacting step, e.g. between room temperature and 140 °C.

Preferably, the force between the rollers 3, 4, measured at the position where the gap is measured, is between 25 kN and 75 kN, preferably between 40 kN and 60 kN, for a roller having a diameter between 250 mm and 1500 mm, preferably between 400 mm and 600 mm, and having a width between 40 mm and 1200 mm, preferably between 145 mm and 500 mm. Preferably, the pressure between the rollers 3, 4, measured at the position where the gap is measured, is between 50 MPa and 500 MPa, such as between 75 MPa and 400 MPa, preferably between 100 MPa and 300 MPa.

The duration of the compacting step may be in the range of seconds, from example between 0.5 seconds and 60 seconds. Preferably, the duration of the compacting step is less than 60 seconds, such as less than 50, 40, 30, 20, 10, or 5 seconds.

The compacted tablet 5 leaves the compactor 2 by means of gravity. This means that for a given granule density the tablet 5 must have certain minimal dimensions for easy exit from between the rollers 3, 4 of the compactor 2. The higher the granule density, the smaller the compacted tablet 5 may be.

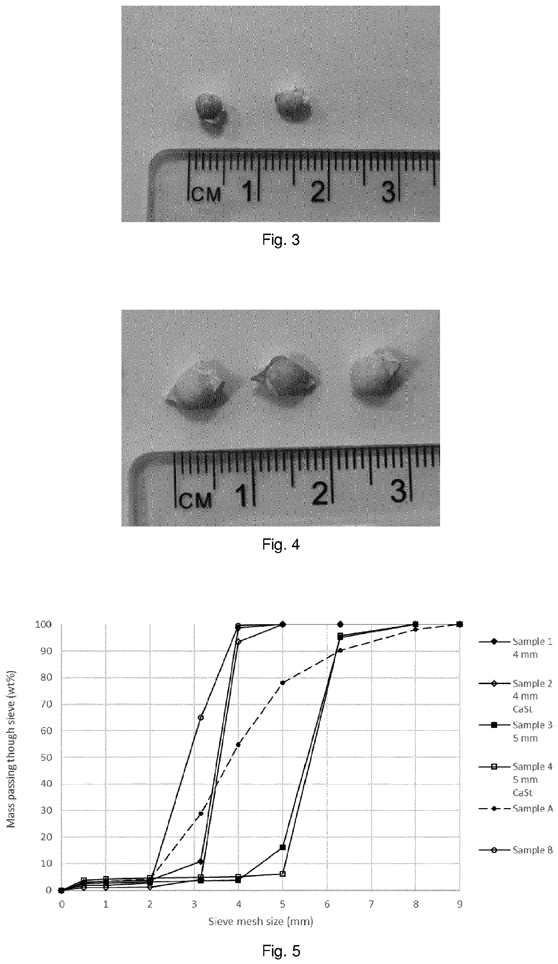

The compacted tablet 5 is then transported into a tablet breaker 6 for the tablet breaking (separation) of the compacted tablet 5 into compacted spheroidal/lens-shaped pellets. The tablet breaking separates the individual spheroidal/lens-shaped pellets from the compacted tablets 5 between the tablet's bumps, said bumps formed by the embossed surface of one or both rollers 3, 4 of the compactor 2. The smaller the bumps, and thus the resulting spheroidal/lens-shaped pellets 8, are, the more difficult it is to control the tablet breaking to avoid damage to the pellets. Damage results in broken pellets, the pellets consequently having undersized dimensions. The smaller the bumps, the more difficult it is to avoid insufficient tablet breaking as well, which results in pellets with oversized dimensions. The compacted spheroidal/lens-shaped pellets are then fed to a polishing drum 7. The polishing drum 7 is a concentric or coaxial double drum where the internal drum is perforated so that smaller pellets can pass. Remaining inside the inner drum, the compacted pellets are polished by the rotation movement to eliminate sharp edges and irregular dimensions of the compacted pellets, to obtain compacted spheroidal/lens-shaped pellets 8. Contrary to production methods of the state of the art, the inventors are able to obtain a very high yield in the tablet breaking step and the subsequent polishing step, leading to pellets having a narrow particle size distribution and a reduced amount of pellets having out-of-range dimensions. Fig. 3 and Fig. 4 show compacted spheroidal/lens-shaped pellets 8 after the tablet breaking step and the polishing step, having resp. an average size of 4 mm and 5.5 mm.

The compacted pellets 8 are then transported to a screener 9, for example a sieve or a set of sieves, for screening to separate the undersized pellets 12 and the oversized pellets 11 from the pellets 10 having a pre-selected pellet size. For example in the present invention to produce granule with a D50 around 3.5 mm, it is found that pellets having a size lower than 2 mm may be considered undersized, and are often broken pellets. These undersized particles may also comprise small quantities of dust and powder formed during the separation and the polishing steps. In the present invention, pellets having a size higher than 6 mm may be considered oversized, because they often show burrs, rough edges, and/or aggregates of two or more pellets still attached to each other.

Optionally, as shown in Fig. 2, the pellets 10 may receive a post-treatment in a post-treatment equipment 14. Said post treatment may be a coating step or a surface treatment such as, without being limited thereto, a Corona treatment, a plasma treatment, at atmospheric pressure or low pressure, a spray coating, a dip coating. Said post-treatment may be performed in a tumbler, e.g. a rotary drum, wherein the pellets are rotated. Alternatively, said post treatment may be performed such that the pellets are spread on a horizontal surface, such as a conveyor belt or a tray. Said post treatment may be a continuous process step. Alternatively, said post treatment may be a batch process step.

When the post-treatment is a coating, said coating may delay the absorption of water and/or moisture by the pellets, and/or to delay the reaction of the pellets with moisture and/or water. The coating may have one or more of the following functions, without being limited thereto: delaying the absorption of moisture from the atmosphere without negatively affecting the sensitivity to water in the midterm, improving the stability of the pellets, coloring the pellets (the coating being a dye or a colorant), providing a fertilizer and/or a macronutrient, enhancing the visual aspect of the pellet, for example the degree of shiny appearance.

When said post treatment is a surface treatment, said surface treatment may be a process to enhance or reduce the surface tension of the pellets for a limited duration of minutes, days, weeks, up to months.

The pellets 15 after the optional post-treatment are then packed for storage and shipment.

The process according to the invention may further comprise a step of recycling the undersized 12 and/or oversized 11 compacted pellets. The recycling step may comprise the grinding of pellets 11, 12 in a grinder 16 into recycled powder particles 17, which may be reused in the production process. Upon reuse of the recycled powder particles 17, the powder 1, the recycled powder 17 and/or optionally an additive 13 may be mixed in a mixer 18 to obtain a homogeneous powder 19 that is then fed to the compactor 2.

### Examples

Table 1 represents the relevant test data for four examples according to the present invention, as well as for two comparative examples. All samples are made starting from a powder having the same composition, comprising a calcium/magnesium source comprising primarily CaO and a limited amount of a magnesium source comprising primarily MgO. The particles in the powder mixture have a D95 equal to or lower than 2 mm.

The examples according to the invention are produced by compacting the powder 1 at a pressure between the rollers 3, 4 of the compactor 2 between 40 kN and 60 kN, followed by separating the obtained tablets 5 in a tablet breaker 6, polishing the pellets in a polishing drum 7 followed by screening the compacted spheroidal/lens-shaped pellets 8 in a screener 9.

Samples 1 and 2 are both pellets having an average size (D50 value of the PSD) of approximately 4 mm, wherein Sample 2 comprises calcium stearate (CaSt - 0.15 wt%) as additive to the powder.

Samples 3 and 4 are both pellets having an average size of approximately 5.5 mm (D50 value of the PSD), wherein Sample 4 comprises calcium stearate (CaSt - 0.15 wt%) as additive to the powder.

The comparative examples are produced from pebbles coming from the kiln, followed by a screening step to separate undersized and oversized pellets from pellets having a pre-selected size. The pre-selected size is from 2 mm to 8 mm for Sample A and from 2 mm to 4 mm for Sample B. The pellets of Samples A and B do not comprise calcium stearate (CaSt) as additive.

The particle size distribution reported in Table 1 is measured by sieve analysis after the screening step. Fig. 5 shows the cumulative particle size distribution (PSD) in graphical form. The D10 and D90 value are calculated from the cumulative PSD. All samples 1 to 4, according to the invention, have a D10/D90 ratio that is at least 0.73, while the D10/D90 ratio of the comparative samples A and B is lower than 0.60. The samples according to the invention have thus a significantly narrower PSD.

It is further clear from Table 1 that the load until rupture is for all four samples of the invention at least 80 N, up to even 110 N, while the load until rupture of the comparative samples is at most 27.5 N. The compressive strength, measured by compression testing until rupture, is for all four samples of the invention at least 1.87 $N/mm^2$, up to even 6.26 $N/mm^2$, while the compressive strength of the comparative samples is at most 1.74 $N/mm^2$, and goes as low as 0.62 $N/mm^2$.

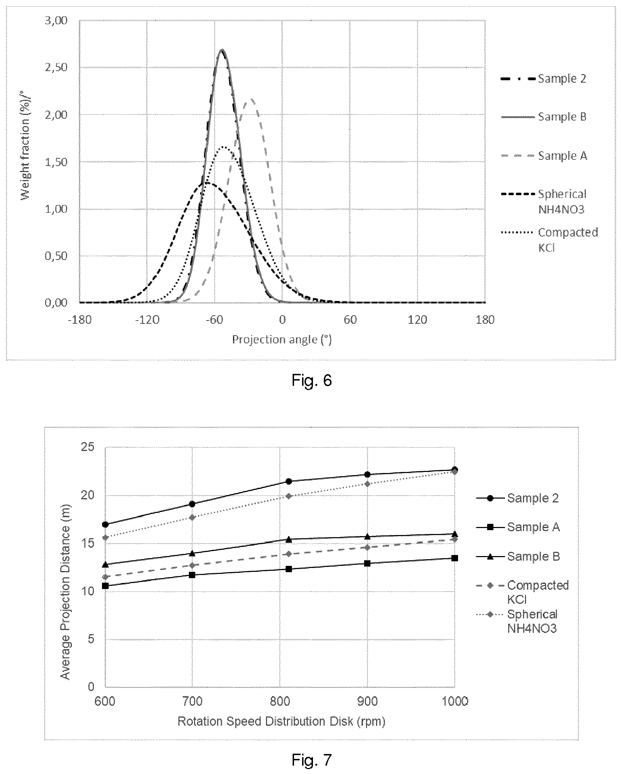

Fig. 6 shows the projection angle distribution for Sample 2 according to the invention, reference Samples A and B of Table 1, spherical $NH_4NO_3$ (fertilizer) and non-spherical potassium chloride (KCl) (nutrient). The projection angle distribution is measured and calculated according to the test set-up and the procedure as explained above. The rotational speed or velocity at which the test is performed is 810 rpm. It is clear from Fig. 6 that the pellets of the present invention (Sample 2) show a narrower angle distribution than sample A, the nutrient and the fertilizer. For Sample 2 almost 100% of the pellets is distributed at a projection angle between -100° and 0° (a range of 100°), whereas for sample A the distribution is between -90° and 30° (a range of 120°).

Fig. 7 shows the average projection distance for Sample 2 according to the invention, reference Samples A and B of Table 1, spherical $NH_4NO_3$ (fertilizer) and non-spherical potassium chloride (KCl) (nutrient). The projection distance is measured as explained above, for rotation speeds of the distribution disk from 600 rpm up to 1000 rpm.

It is clear from Fig. 7 that the pellets of the present invention (Sample 2) show significantly larger average projection distances than the pellets of the comparative examples (Samples A and B) and the nutrient KCl, and are the only calcium-based pellets having average projection distances in the range of - and even higher than - the spherical fertilizer $NH_4NO_3$. At 600 rpm, the average distribution distance of Sample 2 is 60% higher than that of Sample A, 32.50% higher than that of Sample B, and 47% higher than that of KCl. The average projection distance increases with the rotation speed of the distribution disk.

Table 1

| Characteristic | Unit | Pellets of invention | | | | Comparative samples | |
| --- | --- | --- | --- | --- | --- | --- | --- |
| | | Sample 1 4 mm | Sample 2 4 mm CaSt | Sample 3 5 mm | Sample 4 5 mm CaSt | Sample A | Sample B |
| Additive | | - | CaStearate | - | CaStearate | - | - |
| Granule density (Hg picnometry) | $g/cm^3$ | 1.971 | 2.22 | 1.70 | 1.60 | 1.52 | 1.58 |
| Load until rupture | N | 80 | 100 | 100 | 110 | 27.5 | 27.5 |
| Compressive strength | $N/mm^2$ | 5.07 | 6.26 | 1.87 | 2.18 | 0.62 | 1.74 |
| Mercury porosity ($V_{Hg}$ intrusion) | $cm^3/g$ | 0.174 | 0.189 | 0.190 | 0.190 | 0.322 | 0.300 |

(continued)

| Characteristic | | Unit | Pellets of invention | | | | Comparative samples | |
|---|---|---|---|---|---|---|---|---|
| | | | Sample 1 4 mm | Sample 2 4 mm CaSt | Sample 3 5 mm | Sample 4 5 mm CaSt | Sample A | Sample B |
| PSD after screening (Sieve analysis) | 0 $\mu$m | wt% passing the sieve with mesh width x $\mu$m | 0 | 0 | 0 | 0 | 0 | 0 |
| | 500 $\mu$m | | 2.93 | 1.0 | 2.56 | 3.86 | 2.93 | 1.86 |
| | 1000 $\mu$m | | 3.27 | 1.1 | 2.73 | 4.17 | 3.25 | 1.90 |
| | 2000 $\mu$m | | 3.82 | 1.3 | 3.19 | 4.59 | 4.12 | 2.81 |
| | 3150 $\mu$m | | 10.82 | 3.9 | 3.48 | 4.92 | 28.80 | 64.97 |
| | 4000 $\mu$m | | 98.74 | 93.5 | 3.75 | 5.01 | 54.66 | 99.73 |
| | 5000 $\mu$m | | 100.00 | 100.00 | 16.08 | 6.04 | 78.00 | 100.00 |
| | 6300 $\mu$m | | 100.00 | 100.00 | 95.11 | 95.87 | 90.31 | 100.00 |
| | 8000 $\mu$m | | 100.00 | 100.00 | 100.00 | 100.00 | 98.08 | 100.00 |
| | 10000 $\mu$m | | 100.00 | 100.00 | 100.00 | 100.00 | 100.00 | 100.00 |
| D10 (Calculated from Sieve analysis) | | mm | 3.01 | 3.21 | 4.51 | 5.06 | 2.27 | 2.13 |
| D50 (Calculated from Sieve analysis) | | mm | 3.53 | 3.59 | 5.56 | 5.64 | 3.85 | 2.87 |
| D90 (Calculated from Sieve analysis) | | mm | 3.92 | 3.97 | 6.22 | 6.22 | 6.27 | 3.76 |
| D10/D90 ratio | | No unit | 0.77 | 0.81 | 0.73 | 0.81 | 0.36 | 0.57 |
| Shape ratio ($d_{min}/d_{max}$) | | No unit | 0.66 | 0.66 | 0.56 | 0.61 | 0.55 | 0.54 |

**Claims**

1.  Compacted spheroidal pellets comprising a calcium source and/or a magnesium source, said calcium source comprising at least CaO, said magnesium source comprising at least MgO, wherein the pellets comprise at least 60 wt%, preferably 70 wt% of said CaO and/or said MgO, based on the total weight of the pellets, wherein said pellets have:

    - an average size lower than 10 mm, measured by sieve analysis, and
    - a granule density equal to or higher than 1.60 g/cm$^3$, preferably equal to or higher than 1.70 g/cm$^3$, measured by mercury picnometry.

2.  Pellets according to Claim 1, wherein the pellets have a particle size distribution after tablet breaking and prior to screening, having a D10/D90 ratio equal to or higher than 0.60, wherein the D10 value and the D90 value are obtained by means of sieve analysis.

3.  Pellets according to any preceding claim, wherein the pellets have a mercury porosity equal to or lower than 0.3 cm$^3$/g, preferably equal to or lower than 0.2 cm$^3$/g, measured by mercury intrusion on pores with a diameter larger than 7.5 nm.

4. Pellets according to any preceding claim, wherein the pellets have a load until rupture of at least 40 N, preferably at least 75 N, measured by compression testing until rupture.

5. Pellets according to any preceding claim, wherein the pellets have a neutralization value of at least 70 equivalent CaO according to EN12945, preferably at least 75 equivalent CaO, 80 equivalent CaO, 85 equivalent CaO, 90 equivalent CaO, or 95 equivalent CaO.

6. Pellets according to any preceding claim, wherein said pellets have a dispersibility of at least 70% at 315 $\mu$m in water, according to the method defined in EN15704.

7. Process for manufacturing the compacted spheroidal pellets according to any one of Claims 1 to 6, wherein said process comprises at least the following process steps:

   - providing a homogeneous powder comprising a calcium source and/or a magnesium source, the calcium source comprising at least CaO, the magnesium source comprising at least MgO,
   - compacting the homogeneous powder between two rollers to form a compacted tablet,
   - tablet breaking of the compact tablet into compacted spheroidal pellets,
   - screening the compacted spheroidal pellets by sieving to separate the undersized and the oversized compacted spheroidal pellets from the pellets having a pre-selected pellet size,

   wherein the gap, being the distance between the outer surface of the rollers, said outer surfaces facing each other, measured in the plane defined by the middle point of the cross-section of the two rollers and their central axis, is at least 0.1 mm, and wherein the force between the two rollers, measured at the position where the gap is measured, in the compacting step is between 25 kN and 75 kN, for a roller having a diameter between 250 mm and 1500 mm, preferably between 400 mm and 600 mm, and having a width between 40 mm and 1200 mm, preferably between 145 mm and 500 mm, meaning applying a pressure between 50 MPa and 500 MPa.

8. Process according to Claim 7, wherein the homogeneous powder comprises an additive selected from the group consisting of a fertilizer, a nutrient, and a binding agent or lubricating agent.

9. Process according to Claim 7 or Claim 8, further comprising a mixing step prior to the compacting step.

10. Process according to any one of Claims 7 to 9, wherein the force between the two rollers in the compacting step is between 40 kN and 60 kN.

11. Process according to any one of Claims 7 to 10, wherein the process further comprises a post-treatment, preferably a coating step, applied to the compacted spheroidal pellets after the step of sieving the pellets.

12. Process according to any one of Claims 7 to 11, wherein the process further comprises a step of recycling the undersized compacted spheroidal pellets and/or the oversized compacted spheroidal pellets.

13. Use of the pellets according to any one of Claims 1 to 6 as slag forming material in the steel industry.

14. Use of the pellets according to any one of Claims 1 to 6 as raw material for the production of glass.

Fig. 1

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

**Application Number**

EP 19 20 4888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 517 401 B2 (BAILEY WILLIAM R [US]) 14 April 2009 (2009-04-14) | 1-6,13, 14 | INV. C22B1/24 |
| A | * the whole document * | 7-12 | C22B1/243 C21C7/076 |
| X | US 2018/187276 A1 (STEIN JOSEPH L [US]) 5 July 2018 (2018-07-05) | 1-6,13, 14 | B01J2/00 C01F5/00 |
| A | * the whole document * | 7-12 | C01F11/00 C04B2/00 |
| A | WO 2018/007607 A1 (LHOIST RECH ET DEVELOPPEMENT SA [BE]) 11 January 2018 (2018-01-11) * the whole document * | 1-14 | C05D3/00 |
| A,D | US 2005/011309 A1 (WOLFE LARRY D [US]) 20 January 2005 (2005-01-20) * the whole document * | 1-14 | |

**TECHNICAL FIELDS SEARCHED (IPC)**

C22B
C21C
B01J
C01G
C01F
C04B
C05G
C05D

The present search report has been drawn up for all claims

| Place of search | Date of completion of the search | Examiner |
|---|---|---|
| Munich | 1 April 2020 | Juhart, Matjaz |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 20 4888

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2020

| Patent document cited in search report | | Publication date | Patent family member(s) | | Publication date |
|---|---|---|---|---|---|
| US 7517401 | B2 | 14-04-2009 | CA | 2608867 A1 | 30-11-2006 |
| | | | EP | 1885660 A2 | 13-02-2008 |
| | | | EP | 2860224 A1 | 15-04-2015 |
| | | | US | 2006260508 A1 | 23-11-2006 |
| | | | US | 2008223257 A1 | 18-09-2008 |
| | | | WO | 2006127683 A2 | 30-11-2006 |
| US 2018187276 | A1 | 05-07-2018 | NONE | | |
| WO 2018007607 | A1 | 11-01-2018 | AR | 108988 A1 | 17-10-2018 |
| | | | AR | 108989 A1 | 17-10-2018 |
| | | | AU | 2017294103 A1 | 14-02-2019 |
| | | | AU | 2017294107 A1 | 21-02-2019 |
| | | | AU | 2017294109 A1 | 21-02-2019 |
| | | | AU | 2017294559 A1 | 21-02-2019 |
| | | | AU | 2019284111 A1 | 23-01-2020 |
| | | | BE | 1024901 A1 | 08-08-2018 |
| | | | BE | 1024902 A1 | 08-08-2018 |
| | | | BE | 1024903 A1 | 08-08-2018 |
| | | | BE | 1024907 A1 | 08-08-2018 |
| | | | BE | 1024908 A1 | 08-08-2018 |
| | | | BE | 1024910 A1 | 08-08-2018 |
| | | | BE | 1024911 A1 | 08-08-2018 |
| | | | BR | 112018075537 A2 | 19-03-2019 |
| | | | BR | 112018075553 A2 | 19-03-2019 |
| | | | BR | 112018075560 A2 | 19-03-2019 |
| | | | BR | 112018075593 A2 | 26-03-2019 |
| | | | BR | 112018075623 A2 | 09-04-2019 |
| | | | CA | 3027003 A1 | 11-01-2018 |
| | | | CA | 3027017 A1 | 11-01-2018 |
| | | | CA | 3027025 A1 | 11-01-2018 |
| | | | CA | 3027109 A1 | 11-01-2018 |
| | | | CL | 2018003655 A1 | 25-01-2019 |
| | | | CL | 2018003686 A1 | 01-02-2019 |
| | | | CL | 2019000054 A1 | 29-03-2019 |
| | | | CL | 2019000055 A1 | 29-03-2019 |
| | | | CN | 109641756 A | 16-04-2019 |
| | | | CN | 109843805 A | 04-06-2019 |
| | | | CN | 109982971 A | 05-07-2019 |
| | | | CN | 110023243 A | 16-07-2019 |
| | | | EP | 3356295 A1 | 08-08-2018 |
| | | | EP | 3356296 A1 | 08-08-2018 |
| | | | EP | 3481772 A1 | 15-05-2019 |
| | | | EP | 3481774 A1 | 15-05-2019 |
| | | | EP | 3481775 A1 | 15-05-2019 |
| | | | ES | 2730811 T3 | 12-11-2019 |

EPO FORM P0459

For more details about this annex : see Official Journal of the European Patent Office, No. 12/82

page 1 of 3

**ANNEX TO THE EUROPEAN SEARCH REPORT
ON EUROPEAN PATENT APPLICATION NO.**                    EP 19 20 4888

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2020

| Patent document cited in search report | Publication date | Patent family member(s) | Publication date |
|---|---|---|---|
| | | FR 3053673 A1 | 12-01-2018 |
| | | FR 3053676 A1 | 12-01-2018 |
| | | FR 3053677 A1 | 12-01-2018 |
| | | FR 3053678 A1 | 12-01-2018 |
| | | FR 3053679 A1 | 12-01-2018 |
| | | FR 3053680 A1 | 12-01-2018 |
| | | FR 3053681 A1 | 12-01-2018 |
| | | JP 6633781 B2 | 22-01-2020 |
| | | JP 2019519686 A | 11-07-2019 |
| | | JP 2019522111 A | 08-08-2019 |
| | | JP 2019522112 A | 08-08-2019 |
| | | JP 2019525880 A | 12-09-2019 |
| | | JP 2019527176 A | 26-09-2019 |
| | | KR 20190007010 A | 21-01-2019 |
| | | KR 20190007012 A | 21-01-2019 |
| | | KR 20190007014 A | 21-01-2019 |
| | | KR 20190021233 A | 05-03-2019 |
| | | KR 20190026664 A | 13-03-2019 |
| | | PE 20190305 A1 | 01-03-2019 |
| | | PE 20190537 A1 | 11-04-2019 |
| | | PE 20190775 A1 | 06-06-2019 |
| | | PE 20190862 A1 | 18-06-2019 |
| | | PH 12018502566 A1 | 28-10-2019 |
| | | PH 12018502590 A1 | 14-10-2019 |
| | | PH 12018502591 A1 | 14-10-2019 |
| | | PL 3356295 T3 | 30-09-2019 |
| | | PT 3356295 T | 12-06-2019 |
| | | PT 3356296 T | 21-01-2020 |
| | | SG 11201810909Q A | 30-01-2019 |
| | | SG 11201810995T A | 30-01-2019 |
| | | SG 11201811051S A | 30-01-2019 |
| | | SG 11201811053W A | 30-01-2019 |
| | | TR 201908317 T4 | 21-06-2019 |
| | | TW 201821366 A | 16-06-2018 |
| | | TW 201834970 A | 01-10-2018 |
| | | US 2019144336 A1 | 16-05-2019 |
| | | US 2019292626 A1 | 26-09-2019 |
| | | US 2019337846 A1 | 07-11-2019 |
| | | US 2019337847 A1 | 07-11-2019 |
| | | US 2019345066 A1 | 14-11-2019 |
| | | WO 2018007607 A1 | 11-01-2018 |
| | | WO 2018007629 A1 | 11-01-2018 |
| | | WO 2018007635 A1 | 11-01-2018 |
| | | WO 2018007636 A1 | 11-01-2018 |
| | | WO 2018007637 A1 | 11-01-2018 |
| | | WO 2018007638 A1 | 11-01-2018 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 19 20 4888

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2020

| Patent document cited in search report | Publication date | Patent family member(s) | Publication date |
|---|---|---|---|
| | | WO 2018007639 A1 | 11-01-2018 |
| US 2005011309 A1 | 20-01-2005 | NONE | |

EPO FORM P0459

For more details about this annex : see Official Journal of the European Patent Office, No. 12/82

page 3 of 3

## REFERENCES CITED IN THE DESCRIPTION

**Patent documents cited in the description**

- WO 2016110572 A
- GB 917967 A
- WO 2018007630 A
- WO 2018007634 A
- US 20050011309 A
- CN 109384255
- US 20030097863 A
- WO 2017163246 A
- EP 1610112 B1

**Non-patent literature cited in the description**

- source: Reporting Physisorption Data for Gas/Solid Systems, with Special Reference to the Determination of Surface Area and Porosity. *Pure & Appl. Chem.*, 1985, vol. 57 (4), 603-619